# EUROPÄISCHE PATENTSCHRIFT

(11) **EP 0 714 424 B1**
(45) Veröffentlichungstag und Bekanntmachung des Hinweises auf die Patenterteilung: **02.04.2003**
(21) Anmeldenummer: 95921686.2
(22) Anmeldetag: 19.06.1995
(51) Int. Cl.: C09D 175/06, C09D 5/36, B05B 15/12

(54) **WASSERVERDÜNNBARER STEINSCHLAGSCHUTZLACK UND KOMPENSATIONSLACK, IHRE VERWENDUNG UND VERFAHREN ZU DEREN HERSTELLUNG**
WATER-DILUTABLE STONE IMPACT PROTECTION PAINT AND COMPENSATION PAINT, THEIR USE AND PROCESSES FOR THEIR PRODUCTION
PEINTURE ANTIGRAVILLONNAGE DILUABLE A L'EAU ET PEINTURE DE COMPENSATION, LEUR UTILISATION ET LEURS PROCEDES DE PRODUCTION

(30) Priorität: 20.06.1994 DE 4421172; 15.02.1995 DE 19504947
(43) Veröffentlichungstag der Anmeldung: 05.06.1996
(60) Teilanmeldung: 01116246.8
(73) Patentinhaber: Bollig & Kemper GmbH & Co. KG, 50827 Köln (DE)
(72) Erfinder: HILLE, Hans-Dieter, D-51467 Bergisch Gladbach (DE)
(74) Vertreter: Brandenburg, Thomas, Dr.
(86) Internationale Anmeldenummer: DE9500767
(87) Internationale Veröffentlichungsnummer: WO95035350

(56) Entgegenhaltungen:
- EP-A- 0 142 701
- EP-A- 0 548 727
- EP-A- 0 567 915
- EP-A- 0 574 972
- EP-A- 0 583 728
- EP-A- 0 590 484
- WO-A-92/19686
- WO-A-94/03512

## Beschreibung

Die Erfindung betrifft die Bereitstellung eines wasserverdünnbaren Steinschlagschutz lackes, sowie ein Verfahren zu seiner Herstellung und dessen Verwendung, insbesondere in der Automobilindustrie.

Ein wesentliches Problem bei der Lackierung von Oberflächen, insbesondere von Auto mobilkarosserien, ist die Steinschlagfestigkeit der gesamten Lackierung. Die Steinschlag festigkeit wird bei konventionellen Lackierungen im wesentlichen durch die auf der Elektrocoat-Schicht befindliche und etwa 30 - 40 um dicke Füllerschicht bestimmt, die einerseits die rauhe Oberfläche der Rohkarosserie für die nachfolgende Decklackierung glättet, kleinere Unebenheiten ausfüllt und hauptsächlich einen Schutz gegen mechanische Angriffe (Steinschlagschutzfunktion) bietet.

Eine konventionelle Autolackschicht nach dem sogenannten "Basislack-Klarlack-Verfahren" besteht beispielsweise aus insgesamt vier Schichten. Diese vier Schichten werden nacheinander, in getrennten Lackieranlagen aufgetragen. Die erste, direkt auf dem Autoblech befindliche Schicht ist die Elektrocoat-Schicht, die durch Elektrotauchlackierung - hauptsächlich kathodische Tauchlackierung (KTL) - zwecks Korrosionsschutz aufgebracht wird. Bei der Elektrotauchlackierung entsteht verfahrensbedingt kein Overspray.

Die zweite, auf der Elektrocoat-Schicht befindliche und etwa 30 - 40 µm dicke Schicht ist die sogenannte Füllerschicht, die einerseits die rauhe Oberfläche der Rohkarosserie für die nachfolgende Decklackierung glättet, kleinere Unebenheiten ausfüllt und hauptsächlich einen Schutz gegen mechanische Angriffe (Steinschlagschutzfunktion) bietet. Diese Schicht wird größtenteils durch elektrostatische Applikation eines Einbrennlackes, beispielsweise mit elektrostatischen Hochrotationsglocken und anschließendem Einbrennvorgang bei Temperaturen über 160 °C erzeugt.

Die dritte, auf der Füllerschicht befindliche Schicht ist die Basislackschicht, die durch entsprechende Pigmente der Karosserie die gewünschte Farbe gibt. Der wasserlösliche Basislack wird mit herkömmlichen Spritzverfahren aufgetragen.

Die vierte und oberste, auf der Basislackschicht befindliche Schicht ist die Klarlackschicht, die ebenfalls wie die Basislackschicht durch konventionelle Spritzverfahren aufgetragen wird und einerseits der Karosserie den gewünschten Glanz gibt und andererseits den Bassislack vor Umwelteinflüssen (UV-Strahlung, Salzwasser etc.) schützt.

Der Auftragungswirkungsgrad liegt bei Spritzverfahren zur Zeit zwischen 20 - 80 %, d.h. nur 20 - 80 % des verspritzten Lacks treffen auf das zu lackierende Werkstück auf, der Rest fällt als Overspray an.

Als Overspray bezeichnet man den Lacküberschuß, der beim Lackierungsprozeß durch Spritzauftragungsverfahren nicht auf das zu lackierende Werkstück trifft, sondern mit der Abluft zusammen aus der Lackierzone entfernt wird, um beispielsweise in einer Naßauswaschung in das Auswaschwasser der Spritzkabinen - im folgenden Kabinenabwasser genannt - geführt zu werden, um die in dem Overspray enthaltenen Lackkomponenten auszuwaschen.

Ein großes Problem, das bei Lackierungen im allgemeinen auftritt, sind die Abfälle, insbesondere Lackschlämme. Lackschlämme entstehen durch das Entfernen der größtenteils nicht wasserlöslichen Lackkomponenten aus dem Kabinenabwasser durch Koagulation, damit das nach der Sedimentation oder Abtrennung des Lackschlammes zurückgewonnene Kabinenabwasser aus Umweltschutzgründen im Kreislauf gefahren werden kann.

Angesichts der hohen Kosten der Entsorgung ist die lackherstellende und -verarbeitende Industrie immer stärker daran interessiert, neue Wege zu beschreiten, um derartige Abfälle zu vermeiden. Hierzu gibt es prinzipiell zwei Möglichkeiten: Zum einen versucht man, durch Anwendung spezieller und immer ausgefeilterer Lackiermethoden, praktisch kein Overspray entstehen zu lassen. Hierunter fallen Lackierungsverfahren mittels Fluten, Gießen, Tauchen, Walzen, Coil-Coating, Elektrotauchen o. dgl. Zum anderen versucht man, das Overspray, wie es beispielsweise beim Spritzlackieren immer zwangsläufig entsteht, wieder zu verwenden. Der Auftragungswirkungsgrad liegt bei diesen Spritzverfahren (Luft-, Airless-, Airmixzerstäubung etc.) zur Zeit zwischen 20 - 80 %, d.h. nur 20 - 80 % des verspritzten Lacks treffen auf das zu lackierende Werkstück auf, der Rest fällt al Overspray an.

Ein herkömmlicher, wasserlöslicher Basislack besteht in der Regel aus

| | |
|---|---|
| 5 bis 15 | Gew.% Pigmenten, |
| 10 bis 20 | Gew.% Bindemitteln, |
| 0 bis 20 | Gew.% organischen Lösemitteln, |
| 0 bis 5 | Gew.% Additiven, |
| 40 bis 85 | Gew.% Wasser. |

Ein besonders großes Problem ist die Wiederverwendung des Basislack-Oversprays. Da in einem Automobilwerk aus logistischen Gründen die Karosserien nicht in den verschiedenen Farben reihenweise gespritzt werden (also nicht nach dem Schema: Montags nur schwarze, Dienstags nur weiße, Mittwochs nur rote Karosserien etc.), sondern in einer Stunde mehrere Farbtöne, erhält man im Kabinenabwasser immer eine wechselnde Menge an wasserlöslichen Basislack-Overspray verschiedener Farben. Daher hat das Kabinenabwasser eine unansehnliche, von schlammig-braun bis dreckig-grau changierende Farbe. Das schließt eine direkte Rückführung dieser Komponenten zu dem aufzutragendem Basislack, wie sie in der DE-OS 42 13 671 vorgeschlagen wird, aus.

Bis heute werden in allen großen Autokarosserielackieranlagen die Overspray enthalten-. den Kabinenabwässer durch Koagulierungsmittel in einen Lackschlamm überführt. Früher wurde dieser Lackschlamm auf Deponien gebracht, was inzwischen durch die Gesetzgebung verboten ist. Daher wird heutzutage dieser Koagulat- bzw. Lackschlamm, der immer noch etwa 50 Gew.% Wasser enthält, nach Entfernung der Hauptmenge des Wassers, Trocknung im Drehrohrofen und Mahlen zu Granulat oder Pulver aufgearbeitet und einer Verwertung außerhalb des Lackkreislaufes zugeführt. Hierunter versteht man im Falle des Granulats eine Entsorgung durch sog. "thermische Verwertung" - also Sondermüllverbrennung. Die gewonnenene Energie wiegt aber weder den Materialverlust, noch den Verfahrens- und Investitionsaufwand auf.
Eine stoffliche Verwertung des Oversprays aus Kabinenabwasser im Sinne einer Rückführung in den Spritzvorgang, also einer Verwertung auf höherer Wertstufe, ist nur bei der Verarbeitung von Wasserlacken möglich. Als Wasserlacke werden solche Systeme bezeichnet, die neben den bekannten Lackkomponenten in Wasser dispergierbare Bindemittel enthalten und deren hauptsächliches Lösemittel Wasser ist. Bei dem Einsatz von Wasserlacken in Spritzauftragungsverfahren besteht die Möglichkeit, das Overspray in dem Kabinenabwasser derart niederzuschlagen, daß keine Koagulation entsteht. Dadurch wird das Kabinenabwasser zu einem stark verdünnten Wasserlack, den man durch geeignete Verfahren vom überschüssigen Wasser befreien kann, um ihn wieder als Lack zu verwenden. Die DE-OS 42 07 425 beschreibt ein Verfahren zur Lack-Overspray-Rückgewinnung von wäßrigen Lacken bei Spritzapplikationen durch Ultrafiltration mit anschließender Elektrophorese. Weitere Verfahren zur Rückgewinnung von Wasserlack-Oversprays sind in der DE-OS 34 28 300, CH-OS 1656/59, DE-OS 41 33 130 und DE-OS 42 02 539 beschrieben.

Es hat auch Überlegungen gegeben, das Kabinenabwasser solange im Kreislauf zu fahren, bis eine Konzentration von Wasserlack im Kabinenabwasser erreicht ist, die eine direkte Verwendung des Kabinenabwassers als Wasserlack erlaubt. Aus der JP-PS 49 51 324 ist bekannt, mittels Ultrafiltration den lackhaltigen Rückstand durch Wasserentzug aus dem gesamten Kabinenabwasser so an Lack anzureichern, daß dieser Rückstand zum Farbspritzlackieren wieder verwendet werden kann. In praktischen Versuchen zeigte sich aber, daß eine Anreicherung von Wasserlack im Kabinenabwasser auf eine Festkörperkonzentration über 2 Gew.% dazu führt, daß das Overspray nicht mehr vollständig ausgewaschen wird und die nach außen abgeführte Abluft mehr Overspay enthält, als die gesetzlichen Vorschriften (TA-Luft) zulassen. Als Festkörperkonzentration wird die Gesamtmenge der nicht flüchtigen Lackkomponenten, wie beispielsweise Pigmente, Bindemittel, Additive usw., ausgedrückt als gewichtsmäßiger Anteil, bezogen auf den Gesamtgehalt aller Lackkomponenten, bezeichnet.

Aus den DE-OS 42 13 671, 41 33 130 und 42 07 425 sind Verfahren zur Rückgewinnung des Oversprays von wäßrigen Überzugsmitteln beim Spritzauftrag in Spritzkabinen bekannt, bei denen ein Teil der im Ultrafiltrationskreislauf umlaufenden Flüssigkeit wieder als gleiches wäßriges Überzugsmittel zum Spritzauftrag verwendet wird. Diese umlaufende Flüssigkeit wird immer dem gleichen Spritzmittel zugegeben, aus dessen Overspray sie erhalten wird.
So beschreibt die DE-OS 42 13 671 ein Verfahren zur Rückgewinnung des Oversprays von wäßrigen Überzugsmitteln beim Spritzauftrag in wasserberieselten Spritzkabinen mittels Ultrafiltration, durch die das aufkonzentrierte Kabinenabwasser (Retentat) auf einen Festkörperanteil von bis zu 35 Gew.% angereichert werden kann.
Allerdings ergibt sich bei allen bisher bekannten Verfahren der Nachteil, daß die Wiederverwertung des Oversprays nur sortenrein geschehen kann. Aus dem Overspray eines Basislacks kann nur die Wiederverwertung als gleicher Basislack erfolgen.

Ziel der Erfindung ist es, einen wasserverdünnbaren Steinschlagschutzlack bereitzustellen, der die von der Automobil-industrie vorgeschriebenen Tests erfüllt und gleichzeitig eine Wiederverwertung von Overspray von nicht sortenreinen wasserlöslichen Basislacken ermöglicht.

Diese Aufgabe wird erfindungsgemäß durch einen wasserverdünnbaren Steinschlagschutzlack gelöst, der Overspray von wasserlöslichen Basislacken sowie zusätzliche Bindemittel, Pigmente, organische Lösemittel und Additive enthält.

Unter Pigmenten versteht man gemäß der vorliegenden Erfindung im Anwendungsmedium praktisch unlösliche, anorganische oder organische, bunte oder unbunte Farbmittel, wie sie beispielsweise im "Glasurit-Handbuch Lacke und Farben", 11. Aufl., Curt R. Vincentz Verlag, Hannover 1984, S. 97 - 108 beschrieben sind, also auch Ruß, Titandioxid, Effektpigmente wie Aluminiumbronzen und Glimmerpigment und viele andere mehr.

Unter Bindemittel versteht man hier und im folgenden solche Stoffe, die gleiche oder verschiedenartige Stoffe miteinander verbinden, insbesondere die nichtflüchtigen Anteile eines Lackes ohne Pigment und Füllstoff, aber einschließlich Weichmachern, Trockenstoffen und anderen nichtflüchtigen Additiven, vorzugsweise die wasserverträglichen, filmbildenden Harze, wie beispielsweise Polyester-, Polyurethan- und Acrylatharze und viele mehr, wie sie beispielsweise im "Glasurit-Handbuch Lacke und Farben", loc. dt. S. 19- 96 oder in H. Wagner, H.F. Sarx "Lackkunstharze", Carl Hanser Verlag München 1972 beschrieben sind.

Unter dem Begriff Lösemittel versteht man solche organischen Stoffe, die andere auf physikalischem Wege in Lösung bringen kann wie beispielsweise niedere Alkohole, Glykolether, niedere Ketone, insbesondere die mit Wasser in weiten Bereichen mischbaren organischen Lösemittel wie Butanol, Isopropanol, Methylethylketon und viele mehr, wie sie beispielsweise im "Glasurit-Handbuch Lacke und Farben", loc. cit. S. 117 - 138 beschrieben sind.

Als Additive bezeichnet man Stoffe, die anderen, insbesondere flüssigen Stoffen in kleinen Mengen zugesetzt werden, um deren Eigenschaften in gewünschter Weise zu verändern oder deren Verarbeitung zu erleichtern. Hierzu zählen Glanz-, Netz-, Trocken-, Absetzverhinderungs-, Antiausschwimm-, Antihaut-, Verlaufs-, Trenn- und Gleitmittel sowie UV-Absorber, Biozide, Weichmacher, Antistatika, Stabilisatoren, Antioxidantien, Antiozonantien, Füllstoffe, Viskositätsverbesserer Alterungsschutzmittel, Detergentien, Dispergiermittel, Entschäumer, Erhärtungsbeschleuniger, Erhärtungsverzögerer oder Trockenstoffe, wie sie beispielsweise im "Glasurit-Handbuch Lacke und Farben", loc. cit. S. 113 - 117 beschrieben sind.
In einer weiteren erfindungsgemäßen Ausführungsform enthält der wasserverdünnbare Steinschlagschutzlack auch Kabinenabwasser mit nicht koaguliertem Overspray.

Das Overspray kann für die erfindungsgemäße Verwendung durch alle dem Fachmann bekannten Maßnahmen gewonnen werden. Diese Aufsammlung kann beispielsweise mit den in der I-Lack 61 (1993) S. 425-428 beschriebenen mechanischen Lackrückgewinnungsmög-lichkeiten (Scheibenanlage, Rückgewinnungswand, Rückgewinnungs-band, Relas-Lamellen-Rückgewinnungs-System) erfolgen. Vorzugsweise wird das Overspray durch Naßauswaschung mit einem der bekannten Verfahren in eine im Sinne dieser Erfindung verwendbare Form übergeführt. Diese Naßauswaschung hat zur Folge, daß das Overspray sich im Kabinenabwasser ansammelt.
Das Overspray im Kabinenabwasser hat hinsichtlich der Zusammensetzung der einzelnen Lackkomponenten eine andere Zusammensetzung als der Basislack, da beispielsweise die leicht flüchtigen organischen Lösemittel schneller verdunsten und daher mit der Abluft aus der Spritzkabine heraus ins Freie gelangen.

Das Kabinenabwasser besteht in der Regel aus

| | |
|---|---|
| 0,1 bis 1,5 | Gew.% Pigmenten, |
| 0,1 bis 2,0 | Gew.% Bindemitteln, |
| 0 bis 2,0 | Gew.% organischen Lösemitteln, |
| 0 bis 0,5 | Gew.% Additiven, |
| 94 bis 99,8 | Gew.% Wasser. |

Dieses Kabinenabwasser wird vorzugsweise in einer durch Wasserentzug aufkonzentrierten Form im Sinne dieser Erfindung verwendet. Diese Aufkonzentrierung durch Wasserentzug kann mit den dem Fachmann bekannten Trennverfahren, wie z.B. Einengen durch Eindampfen, Eindicken unter Vakuum, Ausfrieren, Zentrifugieren oder Gefriertrocknen, erfolgen. Eine Aufkonzentrierung des Kabinenabwassers erfolgt üblicherweise durch Ultrafiltration oder eine Kombination von Ultrafiltration und Elektrophorese (DE-OS 42 97 425).
Dieses aufkonzentrierte Kabinenabwasser hat eine Festkörperkonzentration von 10 bis 35 Gew.%. Bei der Aufkonzentration von in Wasser aufgenommenem Overspray ergeben sich Veränderungen in der Zusammensetzung des Konzentrats, weil beispielsweise durch die Ultrafiltration bevorzugt wasserunlösliche und höhermolekulare Bestandteile wie Pigmente und Bindemittel zurückgehalten werden, während die wasserlöslichen und niedermolekularen Bestandteile, wie Lösemittel, Melaminharze und Neutralisationsmittel, bevorzugt in das Permeat übergehen. Durch den Wasserentzug können auch Eigenschaften der Lackkomponenten, wie z.B. Farbton und Rheologie, verändert werden.

Das aufkonzentrierte Kabinenabwasser besteht in der Regel aus

| | |
|---|---|
| 2 bis 12 | Gew.% Pigmenten, |
| 4 bis 18 | Gew.% Bindemitteln, |
| 0 bis 5 | Gew.% organischen Lösemitteln, |
| 0 bis 0,8 | Gew.% Additiven, |
| 64 bis 94 | Gew.% Wasser. |

Durch die Herstellung des erfindungsgemäßen Steinschlagschutzlackes wird somit. ein großes Problem der Spritzlackierung gemäß dem "Basislack/Klarlack"-Verfahren gelöst, weil sämtliches Overspray, das bei der Spritzlackierung der Basislack-Schicht anfällt, aus entsprechendem Kabinenabwasser verwendet werden kann. Das bedeutet, daß das Kabinenabwasser nicht mehr koaguliert werden muß und folglich bei der Aufbringung der Basislack-Schicht kein Lackschlamm mehr entsteht.

Das bedeutet außerdem, daß sowohl das Basislack-Overspray als auch das Overspray des daraus gewonnenen Steinschlagschutzlackes in einem Kabinenabwasser zusammengeführt werden können.

Ein wesentlicher Vorteil der Verwendung von Kabinenabwasser zur Herstellung von Steinschlagschutzlack ist der, daß das Kabinenabwasser auch verschiedene Farbtöne an wasserlöslichen Basislacken enthalten kann und trotzdem auf sehr hoher Wertstufe einer Wiederverwendung zugeführt werden kann.

Ein weiterer, besonderer Vorteil des Ersetzens der herkömmlichen Füller-Schicht durch die erfindungsgemäße Steinschlagschutzschicht liegt darin, daß insbesondere das Einbrennen dieser Füllerschicht entfällt. Die erfindungsgemäße Steinschlagschutzschicht trocknet bei einer Temperatur zwischen 50 und 90 °C und braucht folglich beispielsweise nur mit Infrarotstrahlern getrocknet oder nur vorgetrocknet zu werden. Das bedeutet erhebliche Energie- und Zeiteinsparungen. Auch braucht die erfindungsgemäße Steinschlagschutzschicht nicht in der gleichen Schichtstärke wie die Füllerschicht aufgetragen werden, es genügt die Aufbringung einer zwischen 10 bis 20 µm dicken Steinschlagschutzschicht, um die gleichen mechanischen Eigenschaften zu erreichen, wie die konventionelle Füller-Schicht. Das wiederum bedeutet erhebliche Einsparungen an Material. Ein weiterer Vorteil gegenüber dem Stand der Technik ist, daß anstatt drei nur zwei Kabinenabwasserkreisläufen installiert werden müssen.
Bei einer Wiederverwendung des Klarlackes, z.B. durch Ultrafiltration, wird es erstmals möglich, eine völlig lackschlammfreie Automobilserienlackierung zu betreiben. Es ist sogar möglich, bei der Verwendung von Wasserklarlack mit nur einem Kabinenabwasserkreislauf zu fahren, wenn man die Auftragseffektivität der Wasserklarlackapplikation durch geeignete Möglichkeiten so optimiert, daß die anfallende Overspraymenge den Bedarf an erfindungsgemäßen Steinschlagschutzlack nicht übersteigt. Außerdem kann der Bedarf an Steinschlagschutzlack durch eine Variierung der Schichtdicke (insbesondere Erhöhung) geregelt werden.

In einer besonders bevorzugten Ausführungsform der Erfindung enthält der wasserverdünnbare Steinschlagschutzlack auf eine Festkörperkonzentration von etwa 10 bis 35 Gew.% aufkonzentriertes Kabinenabwasser sowie zusätzliche Bindemittel, Pigmente, organische Lösemittel und Additive.
Als Festkörperkonzentration wird die Gesamtmenge der nicht flüchtigen Lackkomponenten, wie beispielsweise Pigmente, Bindemittel, Additive usw., ausgedrückt als gewichtsmäßiger Anteil, bezogen auf den Gesamtgehalt aller Lackkomponenten, bezeichnet.

Für die Zwecke der Erfindung wird vorzugsweise Kabinenabwasser verwendet, das Overspray aus wasserlöslichen Basislacken verschiedener Farben enthält. Es können aber auch Kabinenabwässer nur eines einzigen Farbtons verwendet werden.

In einer weiteren Ausführungsform der Erfindung ist das zusetzte Bindemittel ein wasserverträgliches, blockiertes Isocyanat, ein Polyurethan-, Polyester- oder Melaminharz und die zuzusetzenden Lösemittel ganz oder teilweise wassermischbar sind.
Die Haftung der Steinschlagschutzschicht ist so beschaffen, daß bei einer starken, von außen auf die gesamte Lackierung einwirkenden mechanischen Belastung, die ohne die erfindungsgemäße Schicht zum Abplatzen der Elektrocoat-Schicht führen würde, die Haftung zur Elektrocoat-Schicht derart eingestellt ist, daß sich einerseits die Steinschlagschutzschicht zwar von der Elektrocoat-Schicht löst, aber letztere nicht mit vom Karosserieblech reißt, andererseits die Abplatzungen möglichst klein sind. Letzteres kann erreicht werden durch den erfindungsgemäßen Steinschlagschutzlack, der eine hohe Rückprallelastizität aufweist. Mit Rückprallelastizität ist die Eigenschaft gemeint, durch die ein mechanischer Impuls (Steinschlag) durch eine elastische Deformation aufgefangen wird. Dadurch wird eine Verletzung des Materials verhindert.

Die besten Eigenschaften können mit Bindemitteln erzielt werden, die nach dem Einbrennen Elastomer-Charakter aufweisen.

Für die Zwecke der Erfindung ist es weiterhin vorteilhaft, wenn der Steinschlagschutzlack 20 bis 60 Gew.% Bindemittel und 2 bis 10 Gew.% Pigmente enthält, insbesondere wenn das Verhältnis von Bindemittel zu Pigmenten zwischen 5 : 1 und 12 : 1 liegt.
Sofern der wasserverdünnbare Steinschlagschutzlack Pigmente enthält, kann dieses Pigment ein Effektpigment, insbesondere eine Aluminiumbronze sein.
Gemäß einer bevorzugten Ausführungsform der Erfindung ist das Bindemittel des erfindungsgemäßen Steinschlagschutzlackes ein wasserverträgliches blockiertes Isocyanat, ein Polyurethan-, Polyester- und/oder Melaminharz.
Dieses Polyesterharz hat in einer weiteren erfindungsgemäßen Form ein mittleres Molekulargewicht von 5.000 bis 10.000; weist genügend Carboxylgruppen auf, die dem Polyesterharz nach einer Neutralisation mit Basen ausreichend wasserverdünnbare Eigenschaften verleihen; und enthält funktionelle Gruppen, insbesondere Hydroxyl-Gruppen, durch die das Polyesterharz vernetzungsfähig gemacht wird.

Das Polyesterharz kann eine OH-Zahl zwischen 20 und 80, insbesondere zwischen 30 und 60 und eine Säurezahl zwischen 10 und 50, insbesondere zwischen 15 und 35, aufweisen.

Seine Glasübergangstemperatur (Tg) kann zwischen -20 und +30 °C liegen.

In einer weiteren Ausführung ist der Polyester insbesondere ein Polykondensationsprodukt eines Diols mit einer Dicarbonsäure in Gegenwart einer mehr als 2 funktionelle Gruppen enthaltenden Komponente.

Das Diol kann aus der Gruppe von 1,6-Hexandiol, Neopentylglykol, 1,4-Dimethylolcyclohexan, Hydroxypivalinsäureneopentylglykolester (HPN), perhydriertem Bisphenol-A, Trimethylolpropan und Trimethylolpropanmonoallylether ausgewählt sein.

Die Dicarbonsäure kann aus der Gruppe von Adipinsäure, Phthalsäure, Isophthalsäure, Hexahydrophthalsäure, Tetrahydrophthalsäure, oder deren möglichen Anhydriden, insbesondere aus der Gruppe der dimeren Fettsäuren, ausgewählt sein.

Die mehr als 2 funktionelle Gruppen enthaltende Komponente kann ein Triol, eine Tricarbonsäure, eine Monohydroxydicarbonsäure, insbesondere eine Dihydroxymonocarbonsäure, vorzugsweise Trimellithsäure, Trimethylolpropan und Dimethylolpropionsäure sein.

Zusätzlich kann der beschriebene Steinschlagschutzlack organische Lösemittel und Additive enthalten.

Falls der aus dem aufkonzentriertem Kabinenabwasser erfindungsgemäß hergestellte Steinschlagschutzlack nicht die gewünschten Schutzeigenschaften gegen von außen auf die gesamte Lackierung wirkenden mechanischen Belastungen haben sollte, so kann er erfindungsgemäß dahingehend konditioniert werden.
Diese Konditionierung erfolgt durch Zugabe der für die gewünschten Eigenschaften der Steinschlagschutzschicht erforderlichen Komponenten, die ganz oder teilweise in Form eines Kompensationslackes mit einer Festkörperkonzentration von 40 bis 80 Gew.% zugegeben werden.

Dieser Kompensationslack enthält alle zur Konditionierung der gewünschten mechanischen Eigenschaften der Steinschlagschutzschicht erforderlichen Komponenten oder nur Teile davon.

Erfindungsgemäß bildet sich also ein Steinschlagschutzlackkreislauf aus, dem immer wieder Basislack-Overspray und Kompensationslack zugeführt wird.
Durch die Konditionierung des aufkonzentrierten Kabinenabwassers stellt sich innerhalb dieses Kreislaufes nach einiger Zeit ein Gleichgewicht ein, das durch die richtige, vom Fachmann leicht zu ermittelnde, Menge an Kompensationslack aufrecht erhalten werden kann.
Der besondere Vorteil bei der Verwendung des Kompensationslackes liegt darin, daß alle Komponenten in dem auf das jeweilige Basislack-System angepaßten Steinschlagschutzlack dem entsprechenden Overspray bzw. Kabinenabwasser in einem Mischvorgang direkt in der Spritzanlage oder deren unmittelbaren Umgebung zugegeben werden können. Daher muß das aufkonzentrierte Kabinenabwasser, das ja bis zu 90 Gew.% Wasser enthalten kann, nicht erst von dem lackverarbeitendem Betrieb zu einem Ort gebracht werden muß, wo es auf seine für die Steinschlagschutzschicht geforderten Eigenschaften untersucht und gegebenenfalls durch die erfindungsgemäßen Verfahren konditioniert wird, sondern daß all dies am Ort der Lackierung geschehen kann.
Je höher die Festkörperkonzentration des Kompensationslackes ist, desto weniger Wasser muß dem Kabinenabwasser entzogen werden, so daß ein Festkörperkonzentration von 40 bis 80 Gew.% als besonders vorteilhaft angesehen werden.

Zusätzlich kann der Kompensationslack auch bis zu 20 Gew.% Pigmente enthalten, wobei das Verhältnis von Bindemittel und Pigmenten bevorzugterweise zwischen 10 : 1 und 15 : 1 beträgt.

Die Erfindung betrifft auch Verfahren zur Herstellung eines wasserverdünnbaren Steinschlagschutzlackes, wobei man das beim Spritzauftragsverfahren anfallende Oversprays aus wasserlöslichen Basislacken verwendet.
Dabei kann man koaguliertes Overspray von wasserlöslichen Basislacken verwenden
In einer bevorzugten Ausführungsform kann man Kabinenabwasser verwenden, dass durch Wasserentzug auf eine Festkörperkonzentration von 10 bis 35 Gew.-% aufweist und dass nicht koaguliertes Overspray aus wasserlöslichen Basislacken enthält.

Hierzu kann man bevorzugterweise Overspray aus wasserlöslichen Basislacken verschiedener Farbtöne verwenden
Die erforderlichen Komponenten können in Form eines Kompensationslackes mit einer Festkörperkonzentration von 20 bis 80 Gew.-% zugesetzt werden, wobei die erforderlichen Komponenten insbesondere Bindemittel, Pigmente, organische Lösemittel und Additive sind.

Die Erfindung betrifft auch die Verwendung eines wasserverdünnbaren Steinschlagschutzlackes zur Lackierung von Automobilkarosserien mit einer Elektrotauch-Grundierung, einer zweiten, sogenannten Füllerschicht, einer dritten Schicht aus einem wasserlöslichen Basislack und einer Klarlack-Deckschicht, wobei die Füllerschicht durch eine Steinschlagschutzschicht aus dem Steinschlagschutzlack in einer Dicke von 10 bis 20 µm ersetzt ist.

In einer weiteren erfindungsgemäßen Ausführungsform wird der wasserverdünnbare Steinschlagschutzlack zur Lackierung von Automobilkarosserien mit einer Elektrotauch-Grundierung, einer Steinschlagschutzschicht aus dem Steinschlagschutzlack in einer Dicke von 10 bis 20 µm und einer Klarlack-Deckschicht verwendet.

Des weiteren wird der wasserverdünnbare Steinschlagschutzlack verwendet zur Lackierung von Automobilkarosserien mit einer Elektrotauch-Grundierung, einer zweiten Schicht, dem sog. Füller, einer dritten Schicht aus einem wasserlöslichen Basislack und einer Klarlack-Deckschicht, dadurch gekennzeichnet, daß die Füllerschicht durch eine Steinschlagschutzschicht einer Dicke von 10 bis 20 µm aus dem erfindungsgemäßen Steinschlagschutzlack ersetzt ist.

Außerdem wird der erfindungsgemäße Steinschlagschutzlack verwendet zur Lackierung von Automobilkarosserien durch Aufbringen einer Elektrotauch-Grundierung (KTL), Einbrennen derselben, Aufbringen eines erfindungsgemäßen Steinschlagschutzlackes, Trocknen desselben bei 50 - 90°C, Aufbringen eines Basislackes, Trocknen desselben bei 50 - 100°C, Aufbringen eines Klarlackes und anschließendes gemeinsames Einbrennen der drei Lackschichten bei 130-160°C.

Der erfindungsgemäße Steinschlagschutzlack kann zur Lackierung aller festen, ebenen oder nichtebenen, glatten oder nichtglatten, metallischen Oberflächen, die nach dem o.a. "Basislack/Klarlack"-Verfahren lackiert und gegen von außen auf die gesamte Lackierung wirkenden mechanischen Belastungen geschützt werden sollen, zwischen Elektrocoatund Basislackschicht eingesetzt werden. Vorzugsweise handelt es sich um glatte metallische Oberflächen, wie sie beispielsweise bei der Lackierung von Anlagen, Geräten, Fenstern, insbesondere von Fahrzeugen (Autos, Lastkraftwagen, Fahrrädern usw.) vorkommen.

Die folgenden Beispiele dienen der Erläuterung der Erfindung.

### BEISPIELE

### Herstellungsbeispiel B für ein Polyesterharz

In einem Reaktionsgefäß mit Rühr-, Kühl- und Heizvorrichtung sowie einer Füllkörperkolonne werden 598 g Dimethylolcyclohexan, 3098 g Dimerfettsäure (Pripol 1009 von der Fa. UNICHEMA) und 371 g Dimethylolpropionsäure eingewogen und so aufgeheizt, daß die Kolonnenkopftemperatur 100 °C nicht übersteigt. Die maximale Veresterungstemperatur beträgt 220 °C. Bei einer Säurezahl von 30 wird abgekühlt und mit 1651 g Butylglykol verdünnt. Man erhält einen Polyester mit einem Festkörpergehalt von 70 % und einer Hydroxylzahl von 30.

### Beispiel 3 (Kompensationslack)

206 Teile des Polyesterharzes aus Herstellungsbeispiel B werden unter Rühren mit einer Mischung aus 289 Teilen vollentsalztem Wasser und 7,5 Teilen Dimethylethanolamin versetzt. Dazu werden unter weiterem Rühren 298 Teile des blockierten Isocyanates Bayhydrol LS 2050 von der Fa. Bayer AG Leverkusen gegeben. Der pH-Wert wird mit einer 10%igen wäßrigen Dimethylethanolamin-Lösung auf 8,5 eingestellt. Die Viskosität wird mit vollentsalztem Wasser auf 130 sec. eingestellt, gemessen im DIN 4 Becher.

### Beispiel 7 (Basislack mit integrierten Steinschlagschutz)

100 Teile eines Metallic Basislackes des Farbtons Silber, hergestellt wie in der europäischen Patentschrift 502 934 beschrieben, werden unter Rühren mit 135 Teilen des Kompensationslackes aus Beispiel 3 vermischt und auf eine Viskosität von 45 sec. (DIN 4) eingestellt.
Der so modifizierte Basislack wird auf mit einer handelsüblichen Elektrotauchlackierung beschichtete phosphatierte Stahlbleche gespritzt und nach einer Ablüftzeit von 5 Minuten mit dem unmodifizierten Basislack überlackiert. Danach wurde in üblicher Weise, wie oben beschrieben, mit Klarlack überlackiert. Die Schichtdicke der ersten, modifizierten Basislackschicht betrugt 9 µm, die der zweiten, unmodifizierten 7 µm.
Alle Bleche zeigten einen guten, zum Serienstandard vergleichbaren Decklackstand.
Die Bleche wurden einem Steinschlagtest unterzogen, wie er bei Mercedes Benz AG üblich ist. Dabei werden die Testbleche zunächst auf -20 °C gekühlt und bei dieser Temperatur mit einer Stahlkugel von 3 mm Durchmesser mit einer Geschwindigkeit von 250 km/h beschossen. Hierbei dürfen keine Durchschläge zum Blech auftreten, und die Abplatzungen dürfen nicht größer als 8 mm² sein. Alle Testbleche bestanden diesen Test.

## Patentansprüche

1. Wasserverdünnbarer Steinschlagschutzlack, enthaltend Overspray von wasserlöslichen Basislacken sowie zusätzliche Bindemittel, Pigmente, organische Lösemittel und Additive.

2. Wasserverdünnbarer Steinschlagschutzlack nach Anspruch 1, enthaltend Kabinenabwasser mit nicht koaguliertem Overspray von wasserlöslichen Basislacken.

3. Wasserverdünnbarer Steinschlagschutzlack nach Anspruch 1 oder 2, enthaltend auf eine Festkörperkonzentration von etwa 10 bis 35 Gew.-% aufkonzentriertes Kabinenabwasser sowie zusätzliche Bindemittel, Pigmente, organische Lösemittel und Additive.

4. Wasserverdünnbarer Steinschlagschutzlack nach einem der vorangegangenen Ansprüche, enthaltend nicht koaguliertes Overspray von wasserlöslichen Basislacken verschiedener Farbtöne

5. Wasserverdünnbarer Steinschlagschutzlack nach einem der vorangegangenen Ansprüche, **dadurch gekennzeichnet, daß** das zusätzliche Bindemittel ein wasserverträgliches blockiertes Isocyanat, ein Polyurethan-, Polyester- oder Melaminharz ist.

6. Wasserverdünnbarer Steinschlagschutzlack nach einem der vorangegangenen Ansprüche, **dadurch gekennzeichnet, daß** die zuzusetzenden Lösemittel, ganz oder teilweise, wassermischbar sind.

7. Wasserverdünnbarer Steinschlagschutzlack nach einem der vorhergehenden Ansprüche, **dadurch gekennzeichnet, daß** er sich bei vorgegebener mechanischer Belastung nicht oder nur von der Elektrocoatschicht ablöst.

8. Wasserverdünnbarer Steinschlagschutzlack nach einem der vorhergehenden Ansprüche, **dadurch gekennzeichnet, daß** er eine hohe Rückprall-Elastizität besitzt.

9. Wasserverdünnbarer Steinschlagschutzlack nach einem der vorhergehenden Ansprüche, **dadurch gekennzeichnet, daß** das Bindemittel nach dem Einbrennen Elascomer-Charakter hat.

10. Wasserverdünnbarer Steinschlagschutzlack nach einem der vorhergehenden Ansprüche, **dadurch gekennzeichnet, daß** er 20 bis 60 Gew.-% Bindemittel und 2 bis 10 Gew.-% Pigmente enthält.

11. Wasserverdünnbarer Steinschlagschutzlack nach Anspruch 10, **dadurch gekennzeichnet, daß** das Verhältnis von Bindemittel zu Pigmenten zwischen 5 : 1 und 12 : 1 liegt.

12. Wasserverdünnbarer Steinschlagschutzlack nach einem der vorhergehenden Ansprüche, **dadurch gekennzeichnet, daß** das Pigment ein Effektpigment, insbesondere eine Aluminiumbronze ist.

13. Wasserverdünnbarer Steinschlagschutzlack nach einem der vorhergehenden Ansprüche, **dadurch gekennzeichnet, daß** das Bindemittel ein wasserverträgliches blockiertes Isocyanat, ein Polyurethan-, Polyesterund/oder Melaminharz ist.

14. Wasserverdünnbarer Steinschlagschutzlack nach Anspruch 16, **dadurch gekennzeichnet, daß** das Polyesterharz ein mittleres Molekulargewicht von 5.000 bis 10.000 hat; genügend Carboxylgruppen aufweist, die dem Polyesterharz nach einer Neutralisation mit Basen ausreichend wasserverdünnbare Eigenschaften verleiht; und funktionelle Gruppen, insbesondere Hydroxyl-Gruppen, enthält, durch die das Polyesterharz vernetzungsfähig gemacht wird.

15. Wasserverdünnbarer Steinschlagschutzlack nach Anspruch 13 oder 14, **dadurch gekennzeichnet, daß** das Polyesterharz eine OH-Zahl zwischen 20 und 80, insbesondere zwischen 30 und 60 und eine Säurezahl zwischen 10 und 50, insbesondere zwischen 15 und 35, aufweist.

16. Wasserverdünnbarer Steinschlagschutzlack nach einem der Ansprüche 13 bis 15, **dadurch gekennzeichnet, daß** das Polyesterharz eine Glasübergangstemperatur (Tg) zwischen -20 und +30 °C aufweist.

17. Wasserverdünnbarer Steinschlagschutzlack nach einem der Ansprüche 13 bis 16, **dadurch gekennzeichnet, daß** der Polyester ein Polykondensationsprodukt eines Diols mit einer Dicarbonsäure in Gegenwart einer mehr als 2 funktionelle Gruppen enthaltenden Komponente ist.

18. Wasserverdünnbarer Steinschlagschutzlack nach Anspruch 17, **dadurch gekennzeichnet, daß** das Diol aus der Gruppe von 1,6-Hexandiol, Neopentylglykol, 1,4-Dimethylolcyclohexan, Hydroxypivalinsäureneopentylglykolester (HPN), perhydriertem Bisphenol-A, Trimethylolpropan und Trimethylolpropanmonoallylether ausgewählt ist.

19. Wasserverdünnbarer Steinschlagschutzlack nach Anspruch 17 oder 18, **dadurch gekennzeichnet, daß** die Dicarbonsäure aus der Gruppe von Adipinsäure, Phthalsäure, Isophthalsäure, Hexahydrophthalsäure, Tetrahydrophthalsäure, oder deren möglichen Anhydriden, insbesondere aus der Gruppe der dimeren Fettsäuren, ausgewählt ist.

20. Wasserverdünnbarer Steinschlagschutzlack nach einem der Ansprüche 17 bis 19, **dadurch gekennzeichnet, daß** die mehr als 2 funktionelle Gruppen enthaltende Komponente ein Triol, eine Tricarbonsäure, eine Monohydroxydicarbonsäure, insbesondere eine Dihydroxymonocarbonsäure, ist.

21. Wasserverdünnbarer Steinschlagschutzlack nach Anspruch 20, **dadurch gekennzeichnet, daß** die mehr als 2 funktionelle Gruppen enthaltende Komponente Trimellithsäure, Trimethylolpropan, insbesondere Dimethylolpropionsäure, ist.

22. Wasserverdünnbarer Steinschlagschutzlack nach einem der vorhergehenden Ansprüche, **dadurch gekennzeichnet, daß** er zusätzlich organische Lösemittel und Additive enthält.

23. Wasserverdünnbarer Steinschlagschutzlack nach einem der vorhergehenden Ansprüche, **dadurch gekennzeichnet, daß** die dem Overspray zuzusetzenden Komponenten ganz oder teilweise in Form eines Kompensationslackes zugegeben werden.

24. Wasserverdünnbarer Steinschlagschutzlack nach Anspruch 23, **dadurch gekennzeichnet, daß** der Kompensationslack 40 bis 80 Gew.-% Bindemittel enthält.

25. Wasserverdünnbarer Steinschlagschutzlack nach Anspruch 23 oder 24, **dadurch gekennzeichnet, daß** der Kompensationslack zusätzlich bis zu 20 Gew.-% Pigmente enthält.

26. Wasserverdünnbarer Steinschlagschutzlack nach einem der Ansprüche 23 bis 25, **dadurch gekennzeichnet, daß** der Kompensationslack ein Verhältnis von Bindemittel zu Pigmenten zwischen 10 : 1 und 15 : 1 aufweist.

27. Verfahren zur Herstellung eines wasserverdünnbaren Steinschlagschutzlackes nach einem der Ansprüche 1 bis 26, **dadurch gekennzeichnet, daß** man das beim Spritzauftragsverfahren anfallende Oversprays aus wasserlöslichen Basislacken verwendet.

28. Verfahren nach Anspruch 27, **dadurch gekennzeichnet, daß** man nicht koaguliertes Overspray von wasserlöslichen Basislacken verwendet.

29. Verfahren nach Anspruch 27 oder 28, **dadurch gekennzeichnet, daß** man durch Wasserentzug auf eine Festkörperkonzentration von 10 bis 35 Gew.-% konzentriertem Kabinenabwasser, enthaltend nicht koaguliertes Overspray aus wasserlöslichen Basislacken verwendet.

30. Verfahren nach einem der Ansprüche 27 bis 29, **dadurch gekennzeichnet, daß** man Overspray aus wasserlöslichen Basislacken verschiedener Farbtöne verwendet.

31. Verfahren nach einem der Ansprüche 27 bis 30, **dadurch gekennzeichnet, daß** die erforderlichen Komponenten in Form eines Kompensationslackes mit einer Festkörperkonzentration von 20 bis 80 Gew.-% zugesetzt werden.

32. Verfahren nach Anspruch 31, **dadurch gekennzeichnet, daß** die erforderlichen Komponenten Bindemittel, Pigmente, organische Lösemittel und Additive sind.

33. Verwendung eines wasserverdünnbaren Steinschlagschutzlackes nach einem der Ansprüche 1 bis 26 zur Lackierung von Automobilkarosserien mit einer Elektrotauch-Grundierung, einer zweiten, sogenannten Füllerschicht, einer dritten Schicht aus einem wasserlöslichen Basislack und einer Klarlack-Deckschicht, **dadurch gekennzeichnet, daß** die Füllerschicht durch eine Steinschlagschutzschicht aus dem Steinschlagschutzlack nach einem der vorhergehenden Ansprüche 1 bis 26 in einer Dicke von 10 bis 20 µm ersetzt ist.

34. Verwendung eines wasserverdünnbaren Steinschlagschutzlackes nach einem der Ansprüche 1 bis 26 zur Lackierung von Automobilkarosserien mit einer Elektrotauch-Grundierung, einer Steinschlagschutzschicht aus dem Steinschlagschutzlack nach einem der Ansprüche 1 bis 26 in einer Dicke von 10 bis 20 µm und einer Klarlack-Deckschicht.

35. Verwendung eines wasserverdünnbaren Steinschlagschutzlackes nach einem der Ansprüche 1 bis 26 zur Herstellung einer Steinschlagschutzlackierung von Automobilkarosserien mit einer Elektrotauch-Grundierung, einer zweiten Schicht, dem sog. Füller, einer dritten Schicht aus einem wasserlöslichen Basislack und einer Klarlack-Deckschicht, **dadurch gekennzeichnet, daß** die Füllerschicht durch eine Steinschlagschutzschicht einer Dicke von 10 bis 20 µm aus dem Steinschlagschutzlack nach einem der Ansprüche 1 bis 26 ersetzt ist.

36. Verwendung eines wasserverdünnbaren Steinschlagschutzlackes nach einem der Ansprüche 1 bis 26 zur Herstellung einer Steinschlagschutzlackierung von Automobilkarosserien durch Aufbringen einer Elektrotauch-Grundierung (KTL), Einbrennen derselben, Aufbringen eines Steinsschlagschutzlackes nach einem der Ansprüche 1 - 26, Trocknen desselben bei 50 - 90 °C, Aufbringen eines Basislackes, Trocknen desselben bei 50 - 100 °C, Aufbringen eines Klarlackes und anschließendes gemeinsames Einbrennen der drei Lackschichten bei 130 - 160 °C.

## Claims

1. Water-dilutable stone impact protection paint containing overspray from water-soluble base paints together with additional binders, pigments, organic solvents and additives.

2. Water-dilutable stone impact protection paint according to claim 1, containing booth effluent with uncoagulated overspray from water-soluble base paints.

3. Water-dilutable stone impact protection paint according to claim 1 or 2, containing booth effluent concentrated to a solids concentration of about 10 to 35 wt.% together with additional binders, pigments, organic solvents and additives.

4. Water-dilutable stone impact protection paint according to one of the above claims, containing uncoagulated overspray from water-soluble base paints of different colours.

5. Water-dilutable stone impact protection paint according to one of the above claims, **characterised in that** the additional binder is a water-miscible blocked isocyanate, a polyurethane, polyester or melamine resin.

6. Water-dilutable stone impact protection paint according to one of the above claims, **characterised in that** the solvents to be added are completely or partly water-miscible.

7. Water-dilutable stone impact protection paint according to one of the above claims, **characterised in that** it does not become detached under a preset mechanical stress, or only becomes detached from the electrocoat film.

8. Water-dilutable stone impact protection paint according to one of the above claims, **characterised in that** it possesses high impact resilience.

9. Water-dilutable stone impact protection paint according to one of the above claims, **characterised in that** the binder has an elastomeric nature after stoving.

10. Water-dilutable stone impact protection paint according to one of the above claims, **characterised in that** it contains 20 to 60 wt.% binder and 2 to 10 wt.% pigments.

11. Water-dilutable stone impact protection paint according to claim 10, **characterised in that** the ratio of binder to pigments is between 5 : 1 and 12 : 1.

12. Water-dilutable stone impact protection paint according to one of the above claims, **characterised in that** the pigment is a special effect pigment, particularly an aluminium bronze.

13. Water-dilutable stone impact protection paint according to one of the above claims, **characterised in that** the binder is a water-miscible blocked isocyanate, a polyurethane, polyester and/or melamine resin.

14. Water-dilutable stone impact protection paint according to claim 16, **characterised in that** the polyester resin has an average molecular weight of 5,000 to 10,000; exhibits sufficient carboxyl groups to give the polyester resin adequate water-dilutable properties after neutralisation with bases; and contains functional groups, particularly hydroxyl groups, by means of which the polyester resin is made capable of crosslinking.

15. Water-dilutable stone impact protection paint according to claim 13 or 14, **characterised in that** the polyester resin has an OH value between 20 and 80, particularly between 30 and 60, and an acid value between 10 and 50, particularly between 15 and 35.

16. Water-dilutable stone impact protection paint according to one of claims 13 to 15, **characterised in that** the polyester resin has a glass transition temperature (Tg) between -20 and +30°C.

17. Water-dilutable stone impact protection paint according to one of claims 13 to 16, **characterised in that** the polyester is a polycondensation product of a diol with a dicarboxylic acid in the presence of a component containing more than 2 functional groups.

18. Water-dilutable stone impact protection paint according to claim 17, **characterised in that** the diol is selected from the group consisting of 1,6-hexanediol, neopentyl glycol, 1,4-dimethylolcyclohexane, neopentyl glycol hydroxypivalate (HPN), perhydrogenated bisphenol A, trimethylolpropane and trimethylolpropane monoallyl ether.

19. Water-dilutable stone impact protection paint according to claim 17 or 18, **characterised in that** the dicarboxylic acid is selected from the group consisting of adipic acid, phthalic acid, isophthalic acid, hexahydrophthalic acid, tetrahydrophthalic acid or their possible anhydrides, particularly from the group of the dimeric fatty acids.

20. Water-dilutable stone impact protection paint according to one of claims 17 to 19, **characterised in that** the component containing more than 2 functional groups is a triol, a tricarboxylic acid, a monohydroxydicarboxylic acid, particularly a dihydroxymonocarboxylic acid.

21. Water-dilutable stone impact protection paint according to claim 20, **characterised in that** the component containing more than 2 functional groups is trimellitic acid, trimethylolpropane, particularly dimethylolpropionic acid.

22. Water-dilutable stone impact protection paint according to one of the above claims, **characterised in that** it additionally contains organic solvents and additives.

23. Water-dilutable stone impact protection paint according to one of the above claims, **characterised in that** the components to be added to the overspray are added wholly or partly in the form of a compensation paint.

24. Water-dilutable stone impact protection paint according to claim 23, **characterised in that** the compensation paint contains 40 to 80 wt.% of binder.

25. Water-dilutable stone impact protection paint according to claim 23 or 24, **characterised in that** the compensation paint additionally contains up to 20 wt.% of pigments.

26. Water-dilutable stone impact protection paint according to one of claims 23 to 25, **characterised in that** the compensation paint has a ratio of binder to pigments of between 10 : 1 and 15 : 1.

27. Process for the production of a water-dilutable stone impact protection paint according to one of claims 1 to 26, **characterised in that** the overspray from water-soluble base paints arising during the spray application process is used.

28. Process according to claim 27, **characterised in that** uncoagulated overspray from water-soluble base paints is used.

29. Process according to claim 27 or 28, **characterised in that** booth effluent concentrated by water removal to a solids concentration of 10 to 35 wt.%, containing uncoagulated overspray from water-soluble base paints, is used.

30. Process according to one of claims 27 to 29, **characterised in that** overspray from water-soluble base paints of different colours is used.

31. Process according to one of claims 27 to 30, **characterised in that** the necessary components are added in the form of a compensation paint with a solids concentration of 20 to 80 wt.%.

32. Process according to claim 31, **characterised in that** the necessary components are binders, pigments, organic solvents and additives.

33. Use of a water-dilutable stone impact protection paint according to one of claims 1 to 26 for the painting of car bodies with an electrodeposition primer, a second, so-called filler coat, a third coat consisting of a water-soluble base paint and a clear lacquer top coat, **characterised in that** the filler coat is replaced by a stone impact protection coat consisting of the stone impact protection paint according to one of the above claims 1 to 26 in a thickness of 10 to 20 µm.

34. Use of a water-dilutable stone impact protection paint according to one of claims 1 to 26 for the painting of car bodies with an electrodeposition primer, a stone impact protection coat consisting of the stone impact protection paint according to one of claims 1 to 26 in a thickness of 10 to 20 µm and a clear lacquer top coat.

35. Use of a water-dilutable stone impact protection paint according to one of claims 1 to 26 for the production of a stone impact protection painting of car bodies with an electrodeposition primer, a second coat, the so-called filler, a third coat consisting of a water-soluble base paint and a clear lacquer top coat, **characterised in that** the filler coat is replaced by a stone impact protection coat in a thickness of 10 to 20 µm consisting of the stone impact protection paint according to one of claims 1 to 26.

36. Use of a water-dilutable stone impact protection paint according to one of claims 1 to 26 for the production of a stone impact protection painting of car bodies by applying an electrodeposition primer (electrophoretic paint), stoving this, applying a stone impact protection paint according to one of claims 1 to 26, drying this at 50 - 90°C, applying a base paint, drying this at 50 - 100°C, applying a clear lacquer and then jointly stoving the three coats at 130 - 160°C.

## Revendications

1. Laque antigravillonnage diluable dans l'eau, contenant de l'overspray de laques de base solubles dans l'eau ainsi que des liants additionnels, des pigments, des solvants organiques et des additifs.

2. Laque antigravillonnage diluable dans l'eau selon la revendication 1, contenant de l'eau résiduaire de cabine de pulvérisation avec de l'overspray non coagulé de laques de base solubles dans l'eau.

3. Laque antigravillonnage diluable dans l'eau selon l'une des revendications 1 ou 2, contenant de l'eau résiduaire de cabine de pulvérisation concentrée à une concentration de matières solides d'environ 10 à 35% en poids ainsi que des liants additionnels, des pigments, des solvants organiques et des additifs.

4. Laque antigravillonnage diluable dans l'eau selon l'une quelconque des revendications précédentes, contenant de l'overspray non coagulé de laques de base solubles dans l'eau de différentes nuances de couleur.

5. Laque antigravillonnage diluable dans l'eau selon l'une quelconque des revendications précédentes, **caractérisée par le fait que** le liant additionnel est un isocyanate bloqué compatible avec l'eau, une résine de polyuréthanne, une résine de polyester ou une résine de mélamine.

6. Laque antigravillonnage diluable dans l'eau selon l'une quelconque des revendications précédentes, **caractérisée par le fait que** les solvants à ajouter sont miscibles à l'eau, totalement ou partiellement.

7. Laque antigravillonnage diluable dans l'eau selon l'une quelconque des revendications précédentes, **caractérisée par le fait qu'**elle ne se détache pas ou seulement de la couche d'électrodéposition dans le cas d'une charge mécanique donnée.

8. Laque antigravillonnage diluable dans l'eau selon l'une quelconque des revendications précédentes, **caractérisée par le fait qu'**elle possède une élasticité de rebondissement élevée.

9. Laque antigravillonnage diluable dans l'eau selon l'une quelconque des revendications précédentes, **caractérisée par le fait que** le liant a un caractère d'élastomère après la cuisson.

10. Laque antigravillonnage diluable dans l'eau selon l'une quelconque des revendications précédentes, **caractérisée par le fait qu'**elle contient 20 à 60% en poids de liant et 2 à 10% en poids de pigments.

11. Laque antigravillonnage diluable dans l'eau selon la revendication 10, **caractérisée par le fait que** le rapport du liant aux pigments se situe entre 5:1 et 12:1.

12. Laque antigravillonnage diluable dans l'eau selon l'une quelconque des revendications précédentes, **caractérisée par le fait que** le pigment est un pigment à effets, en particulier un bronze d'aluminium.

13. Laque antigravillonnage diluable dans l'eau selon l'une quelconque des revendications précédentes, **caractérisée par le fait que** le liant est un isocyanate bloqué compatible avec l'eau, une résine de polyuréthanne, une résine de polyester et/ou une résine de mélamine.

14. Laque antigravillonnage diluable dans l'eau selon la revendication 13, **caractérisée par le fait que** la résine de polyester a une masse moléculaire moyenne de 5000 à 10 000 ; présente suffisamment de groupes carboxyle, ce qui communique à la résine de polyester après une neutralisation par des bases, suffisamment de propriétés diluables dans l'eau ; et contient des groupes fonctionnels, en particulier des groupes hydroxyle, par lesquels la résine de polyester est rendue apte à réticuler.

15. Laque antigravillonnage diluable dans l'eau selon l'une des revendications 13 ou 14, **caractérisée par le fait que** la résine de polyester présente un indice d'OH entre 20 et 80, en particulier entre 30 et 60, et un indice d'acide entre 10 et 50, en particulier entre 15 et 35.

16. Laque antigravillonnage diluable dans l'eau selon l'une quelconque des revendications 13 à 15, **caractérisée par le fait que** la résine de polyester présente une température de transition vitreuse (Tg) entre -20 et +30°C.

17. Laque antigravillonnage diluable dans l'eau selon l'une quelconque des revendications 13 à 16, **caractérisée par le fait que** le polyester est un produit de polycondensation d'un diol avec un acide dicarboxylique en présence d'un composant contenant plus de 2 groupes fonctionnels.

18. Laque antigravillonnage diluable dans l'eau selon la revendication 17, **caractérisée par le fait que** le diol est choisi dans le groupe constitué par le 1,6-hexanediol, le néopentylglycol, le 1,4-diméthylolcyclohexane, l'ester du néopentylglycol et de l'acide hydroxypivalique (HPN), le bisphénol A perhydrogéné, le triméthylolpropane et l'éther monoallylique du triméthylol propane.

19. Laque antigravillonnage diluable dans l'eau selon l'une des revendications 17 ou 18, **caractérisée par le fait que** l'acide dicarboxylique est choisi dans le groupe constitué par l'acide adipique, l'acide phtalique, l'acide isophtalique, l'acide hexahydrophtalique, l'acide tétrahydrophtalique ou leurs anhydrides possibles, en particulier du groupe des acides gras dimères.

20. Laque antigravillonnage diluable dans l'eau selon l'une quelconque des revendications 17 à 19, **caractérisée par le fait que** le composant contenant plus de 2 groupes fonctionnels est un triol, un acide tricarboxylique, un acide monohydroxydicarboxylique, en particulier un acide dihydroxymonocarboxylique.

21. Laque antigravillonnage diluable dans l'eau selon la revendication 20, **caractérisée par le fait que** le composant contenant plus de 2 groupes fonctionnels est l'acide trimellitique, le triméthylolpropane, en particulier l'acide diméthylolpropionique.

22. Laque antigravillonnage diluable dans l'eau selon l'une quelconque des revendications précédentes, **caractérisée par le fait qu'**elle contient additionnellement des solvants organiques et additifs.

23. Laque antigravillonnage diluable dans l'eau selon l'une quelconque des revendications précédentes, **caractérisée par le fait que** les composants à ajouter à l'overspray sont ajoutés entièrement ou totalement sous la forme d'une laque de compensation.

24. Laque antigravillonnage diluable dans l'eau selon la revendication 23, **caractérisée par le fait que** la laque de compensation contient 40 à 80% en poids de liant.

25. Laque antigravillonnage diluable dans l'eau selon l'une des revendications 23 ou 24, **caractérisée par le fait que** la laque de compensation contient additionnellement jusqu'à 20% en poids de pigments.

26. Laque antigravillonnage diluable dans l'eau selon l'une quelconque des revendications 23 à 25, **caractérisée par le fait que** la laque de compensation présente un rapport du liant aux pigments entre 10:1 et 15:1.

27. Procédé de préparation d'une laque antigravillonnage diluable dans l'eau, telle que définie à l'une quelconque des revendications 1 à 26, **caractérisé par le fait que** l'on utilise de l'overspray de laques de base solubles dans l'eau, produit dans le procédé d'application par pulvérisation.

28. Procédé selon la revendication 27, **caractérisé par le fait que** l'on utilise de l'overspray non coagulé de laques de base solubles dans l'eau.

29. Procédé selon l'une des revendications 27 ou 28, **caractérisé par le fait que** l'on utilise de l'eau résiduaire de cabine de pulvérisation concentrée par déshydratation à une concentration en matières solides de 10 à 35% en poids, contenant de l'overspray non coagulé de laques de base solubles dans l'eau.

30. Procédé selon l'une quelconque des revendications 27 à 29, **caractérisé par le fait que** l'on utilise de l'overspray de laques de base solubles dans l'eau de différentes nuances de couleur.

31. Procédé selon l'une quelconque des revendications 27 à 30, **caractérisé par le fait que** les composants nécessaires sont ajoutés sous la forme d'une laque de compensation ayant une concentration en matières solides de 20 à 80% en poids.

32. Procédé selon la revendication 31, **caractérisé par le fait que** les composants nécessaires sont les liants, les solvants organiques et les additifs.

33. Utilisation d'une laque antigravillonnage diluable dans l'eau, telle que définie à l'une quelconque des revendications 1 à 26, pour le laquage de carrosseries d'automobiles avec une couche de fond d'électrodéposition, une deuxième couche dite d'obturation, une troisième couche d'une- laque de base soluble dans l'eau et une couche de recouvrement de laque transparente, **caractérisée par le fait que** la couche d'obturation est remplacée par une couche antigravillonnage à base d'une laque antigravillonnage telle que définie à l'une des revendications précédentes 1 à 26 dans une épaisseur de 10 à 20 µm.

34. Utilisation d'une laque antigravillonnage diluable dans l'eau telle que définie à l'une quelconque des revendications 1 à 26 pour le laquage de carrosseries d'automobiles avec une couche de fond d'électrodéposition, une couche antigravillonnage d'une laque antigravillonnage telle que définie à l'une quelconque des revendications 1 à 26 dans une épaisseur de 10 à 20 µm et une couche de recouvrement de laque transparente.

35. Utilisation d'une laque antigravillonnage diluable dans l'eau, telle que définie à l'une quelconque des revendications 1 à 26, pour la fabrication d'un laquage antigravillonnage de carrosseries d'automobiles avec une couche de fond d'électrodéposition, une deuxième couche dite d'obturation, une troisième couche d'une laque de base soluble dans l'eau et une couche de recouvrement de laque transparente, **caractérisée par le fait que** la couche d'obturation est remplacée par une couche antigravillonnage d'une épaisseur de 10 à 20 µm d'une laque antigravillonnage telle que définie à l'une des revendications 1 à 26.

36. Utilisation d'une laque antigravillonnage diluable dans l'eau, telle que définie à l'une quelconque des revendications 1 à 26, pour la fabrication d'une laque antigravillonnage de carrosseries d'automobiles par application d'une couche de fond d'électrodéposition (Elektrotauch-Grundierung - KTL), cuisson de celle-ci, application d'une laque antigravillonnage telle que définie à l'une des revendications 1 à 26, séchage de celle-ci à une température de 50-90°C, application d'une laque de base, séchage de celle-ci à une température de 50-100°C, application d'une laque transparente et cuisson ultérieure commune des trois couches de laque à une température de 130-160°C.
